(19) Europäisches Patentamt
European Patent Office
Office européen des brevets

(11) **EP 3 553 533 B1**

(12) **EUROPÄISCHE PATENTSCHRIFT**

(45) Veröffentlichungstag und Bekanntmachung des Hinweises auf die Patenterteilung:
**29.09.2021 Patentblatt 2021/39**

(51) Int Cl.:
***G01P 5/14*** *(2006.01)*     ***G01M 9/06*** *(2006.01)*

(21) Anmeldenummer: **18167059.7**

(22) Anmeldetag: **12.04.2018**

(54) **GRENZSCHICHTSONDE, MESSANORDNUNG SOWIE VERFAHREN ZUM BESTIMMEN EINES FLUIDSTROMS**

BOUNDARY LAYER PROBE, MEASURING DEVICE AND METHOD FOR DETERMINING A FLUID FLOW

SONDE DE COUCHE LIMITE, DISPOSITIF DE MESURE AINSI QUE PROCÉDÉ DE DÉTERMINATION D'UN FLUX D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.10.2019 Patentblatt 2019/42**

(73) Patentinhaber: **Technische Universität Berlin**
**10623 Berlin (DE)**

(72) Erfinder:
• **Rückert, Roland**
  **10247 Berlin (DE)**
• **Eck, Mario**
  **13629 Berlin (DE)**
• **Wieser, Dirk**
  **10557 Berlin (DE)**
• **Peitsch, Dieter**
  **12437 Berlin (DE)**

(74) Vertreter: **Bittner, Thomas L.**
**Boehmert & Boehmert**
**Anwaltspartnerschaft mbB**
**Pettenkoferstrasse 22**
**80336 München (DE)**

(56) Entgegenhaltungen:
**EP-A1- 1 314 985     WO-A1-93/15388**
**DE-A1- 19 724 116**

• **CHENGYU MA ET AL: "A study of directional MEMS dual-fences gauge", 10TH IEEE INTERNATIONAL CONFERENCE ON NANO/MICRO ENGINEERED AND MOLECULAR SYSTEMS, IEEE, 7. April 2015 (2015-04-07), Seiten 449-452, XP033170209, DOI: 10.1109/NEMS.2015.7147465 [gefunden am 2015-07-01]**

**Beschreibung**

Die Erfindung betrifft eine Grenzschichtsonde, eine Messanordnung sowie ein Verfahren zum Bestimmen eines Fluidstroms.

Hintergrund

Die sogenannte Oberflächenzaunsonde repräsentiert in ihrer einfachsten Form mit einem einzelnen geraden Zaun (Hindernis) eine bewährte und vielfach eingesetzte Messtechnik zur Bestimmung von Wandschubspannungen sowie wandnahen Strömungsgeschwindigkeiten. Das Messprinzip besteht darin, die Fluidströmung im wandnahen Bereich durch ein mikroskopisch kleines Hindernis (in diesem Fall ein Zaun) zu stören. Bei bekannten Grenzschichtsonden befinden sich jeweils vor und hinter dem Zaun Druckbohrungen, die als Differenzdruck zusammengefasst werden können. Wird der Zaun überströmt, entsteht stromauf ein Aufstau- und stromab ein Ablösegebiet, beziehungsweise ein Über- und Unterdruck. Eine Drehung der Sonde um 360° liefert die sogenannte Winkelcharakteristik - ein Differenzdruckverlauf in Cosinus Form. Mittels dieser Kurve kann sowohl der Winkel der Zuströmung als auch der absolute Geschwindigkeitswert bestimmt werden. Für die Aufnahme der Winkelcharakteristik muss die Sonde jedoch einmal vollständig um sich selbst gedreht werden. Diese Tatsache birgt viele Nachteile. Einerseits entfällt so die Möglichkeit instantan Schwankungen der Fluidbewegung zu messen und andererseits ist der Messaufbau durch seine Komplexität für viele praktische Anwendungen ungeeignet. Darüber hinaus muss der Messaufwand als vergleichsweise hoch eingestuft werden, da die Sonde in äquidistanten Schritten um 360° gedreht werden muss.

Die Oberflächenzaunsonde wird auch als Grenzschichtsonde bezeichnet.

Die Wandschubspannung ist in der Strömungsmechanik die von einem Fluid auf umströmte Wände ausgeübte, tangential wirkende Kraft pro Flächeneinheit und weist definitionsgemäß eine Richtung auf. Die Wandschubspannung ist der Impulsfluss durch das an die Wand angrenzende Volumen des Fluids und folgt aus der Reibung der Fluidelemente an der Wand und untereinander. In der Strömungsmechanik werden sowohl die gerichtete, vektorielle Form als auch ihr Betrag als Wandschubspannung bezeichnet.

Im Dokument WO 93 / 15 388 A1 ist eine Wandlervorrichtung offenbart, welche ein Maß für die Scherspannung eines Fluids und damit zusammenhängende Größen an einer Oberfläche in einem Fluidstrom liefert. Sie umfasst eine strömungsstörende Komponente, die durch einen wesentlichen Anteil (mindestens 50 %) der erwarteten Dicke der viskosen Unterschicht der Grenzschicht der Oberfläche über die Oberfläche hinausragt. Sie umfasst auch druckempfindliche Halbleiterdioden, die unmittelbar neben, aber auf gegenüberliegenden Seiten der strömungsstörenden Komponente angeordnet sind. Die Dioden registrieren die Druckdifferenz über die strömungsstörende Komponente aufgrund der Störung, wobei die Übergangsbereiche der Dioden so angeordnet sind, dass sie zumindest teilweise mit dem erwarteten strömungsmäßigen Ausmaß der Störung zusammenfallen.

Im Dokument DE 197 24 116 A1 ist eine Durchflussmessung in Kreisrohrströmungen von Gasen und Flüssigkeiten offenbart, wobei ein Verlauf einer Wandschubspannung nach Größe und Richtung über einem Kreisrohrumfang in der Zuströmung gemessen wird. Der Verlauf ist in Kombination mit einem Messwert des Durchflussmessgerätes ein direktes Maß für die Geschwindigkeitsverteilung im Rohr und damit für den gesuchten Volumenstrom.

Der Artikel Ma et al. (2015), A Study of Directional MEMS Dual-fences Gauge, Proceedings of the 10th IEEE International Conference on Nano/Micro Engineered and Molecular Systems, betrifft MEMS (Microelectromechanical systems)-Oberflächenanschlaglehren, um gleichzeitig Größenordnung und Richtung von Wandschubspannung im Windkanal unter zweidimensionale turbulenten Grenzschichten zu messen. Doppelzäune sind hierbei orthogonal zueinander angeordnet.

Das Dokument EP 1 314 985 A1 betrifft eine Luftdaten-Messvorrichtung für Fluggeräte zur Messung von Flugzuständen mit einem an einem Strukturteil angeordneten, an der Übergangsstelle rotations-symmetrischen Sonden-Träger, der durch ein Lager um seine Längsachse drehbar an dem Strukturteil gelagert und massenmäßig um dessen Längsachse ausgeglichen ist. Ein Drehwinkel der Sonde ist über einen Mess-Aufnehmer messbar. Auf der Sonde sind zumindest zwei Strakes symmetrisch zur Sonden-Symmetrieebene angeordnet sind, sodass ein Sondenschiebewinkel bei jedem Anströmzustand minimiert wird. Zur Erfassung von Differenzdrücken und eines Absolutdrucks an der Sonden-Oberfläche sind zumindest drei Druck-Messbohrungen mit diesen zugeordneten Differenzdruck-Aufnehmern vorgesehen.

Zusammenfassung

Aufgabe der Erfindung ist es, eine Grenzschichtsonde, eine Messanordnung sowie ein Verfahren zum Bestimmen eines Fluidstroms anzugeben, mit denen die Strömungseigenschaften im wandnahen Bereich (Grenzschicht) auf verbesserte Art und Weise bestimmt werden kann.

Zur Lösung sind eine Grenzschichtsonde, eine Messanordnung sowie ein Verfahren zum Bestimmen eines Fluidstroms nach dem unabhängigen Anspruch 1 sowie den nebengeordneten Ansprüchen 9 und 10 geschaffen. Ausgestaltungen sind Gegenstand von abhängigen Unteransprüchen.

Nach einem Aspekt ist eine Grenzschichtsonde zum Bestimmen eines Fluidstroms geschaffen. Die Grenzschichtsonde weist eine Messfläche auf, die an einer Sondenwand gebildet ist und entlang welcher im Messbetrieb ein zu bestimmender Fluidstrom anliegt. Es ist eine Anordnung von Messhindernissen vorgesehen, die im Bereich der Messfläche gebildet sind, welche den Fluidstrom in einem Strömungsbereich benachbart zur Messfläche stören. Die Messhindernisse weisen jeweils einen langgestreckten Hindernisverlauf auf, welcher sich über eine jeweilige Hindernislänge erstreckt. Die Messhindernisse sind in Umfangsrichtung in im Wesentlichen äquidistanten Winkelabständen angeordnet. Die Grenzschichtsonde weist Druckmessstellen auf, die zum Erfassen eines jeweiligen lokalen Drucks im Bereich der Messfläche jeweils in radialer Richtung benachbart zu einem zugeordneten der Hindernisse angeordnet sind.

Nach einem weiteren Aspekt ist eine Messanordnung zum Bestimmen eines Fluidstroms mit der Grenzschichtsonde geschaffen. Die Messanordnung weist einen Messraum auf, der eingerichtet ist, eine Strömung eines zu bestimmenden Fluidstroms aufzunehmen, wobei die Strömung entlang einer Sondenwand der Grenzschichtsonde mit einer hierauf gebildeten Messfläche strömen kann. Es ist eine Druckmesseinrichtung vorgesehen, die eingerichtet ist, an Druckmessstellen im Bereich der Messfläche der Grenzschichtsonde jeweils einen lokalen Druck zu erfassen.

Nach einem anderen Aspekt ist ein Verfahren zum Bestimmen einer Wandschubspannung für einen Fluidstrom geschaffen, bei dem eine Grenzschichtsonde bereitgestellt wird und in einem Messraum eine Strömung eines zu bestimmenden Fluidstroms ausgebildet wird. Die Strömung strömt hierbei entlang einer Sondenwand der Grenzschichtsonde mit einer hierauf gebildeten Messfläche. Es werden Druckmesswerte für einen lokalen Druck an Druckmessstellen im Bereich der Messfläche der Grenzschichtsonde erfasst, wobei hierbei für benachbarte Druckmessstellen Differenzdrücke erfasst werden. Mittels Auswerten der Druckmesswerte wird wenigstens eine physikalische Messgröße für eine Grenzschicht des Fluidstroms auf der Messfläche der Grenzschichtsonde bestimmt, wobei die wenigstens eine physikalische Messgröße aus der folgenden Gruppe ausgewählt wird: Fließgeschwindigkeit und Wandschubspannung.

Beim Bestimmen des Fluidstroms kann vorgesehen sein, eine Richtung des Fluidstroms zu bestimmen.

Die in Umfangsrichtung in im Wesentlichen äquidistanten Winkelabständen angeordneten Messhindernisse bilden eine effiziente Anordnung von Messhindernissen, um physikalische Messgrößen für die Grenzschicht des Fluidstroms auf der Messfläche zu bestimmen, zum Beispiel die Wandschubspannung, insbesondere hinsichtlich Betrag und / oder Richtung. Die Messhindernisse bilden eine Anordnung von mikroskopischen Hindernissen, die den zu bestimmenden Fluidstrom in seinem Grenzschichtbereich (wandnaher Bereich zur Messfläche der Grenzschichtsonde) stören, wenn dieser entlang der Messfläche an der Sondenwand strömt. Hierdurch entstehen charakteristische Druckverhältnisse im Bereich der Messfläche, die mithilfe der Druckmessstellen gemessen werden, um hieraus eine oder mehrere physikalische Mess- oder Kenngrößen für die Fluidströmung im wandnahen Bereich zu bestimmen.

Die Messfläche kann mit unterschiedlichen Flächenumfangsformen gebildet sein, zum Beispiel einer runden oder eckigen Form. Die Grenzschichtsonde kann eine Wandung eines Strömungskanals oder -rohres integriert sein, durch welchen hindurch der Fluidstrom strömt. Hierbei kann die Messfläche von einem Wandabschnitt der Wandung gebildet sein.

Die Hindernisse der Anordnung von Messhindernissen können alle gleich oder verschieden ausgebildet sein, hinsichtlich einer Hindernishöhe oder -tiefe.

Ausgehend von der erfassten Differenzdruckwerten kann die physikalische Messgröße bestimmt werden, insbesondere die Wandschubspannung, wie dies in Verbindung mit Grenzschichtsonde an sich bekannt ist.

Die Hindernisse sind im Bereich der Messfläche drehsymmetrisch angeordnet. Dieses bedeutet, dass die Hindernisse mittels Drehen der Messfläche um einen Mittelpunkt der Anordnung von Messhindernissen zur Deckung miteinander gebracht werden können.

Der langgestreckte Hindernisverlauf erstreckt sich zumindest abschnittweise entlang einer gekrümmten Linie. Es kann eine Kombination von einem oder mehreren gekrümmten oder gewölbten Abschnitten und einem oder mehreren geradlinigen Abschnitten im langgestreckten Hindernisverlauf vorgesehen sein. In einer Ausführungsform ist ein mittlerer Abschnitt des langgestreckten Hindernisverlaufs für die Hindernisse gekrümmt oder gewölbt. An den mittleren Abschnitt schließen sich beidseitig nach radial außen gerichtete geradlinige Abschnitte des Hindernisverlaufs an. Der langgestreckte Hindernisverlauf kann für die Hindernisse jeweils durchgehend oder mit Unterbrechungen ausgebildet sein.

Der langgestreckte Hindernisverlauf ist in Bezug auf einen Mittelpunkt oder ein Zentrum der Anordnung von Messhindernissen hin konkav oder konvex gekrümmt. Alternativ kann der langgestreckte Hindernisverlauf in Bezug auf den Mittelpunkt der Anordnung von Messhindernissen von diesem weg gewölbt sein. Bei diesen oder anderen Ausführungsformen kann ein Krümmungsradius im gekrümmten Abschnitt des langgestreckten Hindernisverlaufs für alle Hindernisse der Anordnung gleich sein.

Distale Endabschnitte benachbarter Messhindernisse können ein- oder beidseitig benachbart zueinander benachbart zueinander angeordnet sein. Die distalen Endabschnitte, also die Abschnitte der langgestreckten Hindernisverläufe, die radial außen liegend angeordnet sind, können am umlaufenden äußeren Rand der Messfläche enden. Alternativ ist das Ende des distalen Endabschnitts nach radial innen beabstandet vom äußeren Rand angeordnet. Die benachbarte Anordnung der distalen Endabschnitte kann parallel oder keilförmig ausgebildet sein. Der benachbarte Verlauf kann an den äußeren Rand der Messfläche stoßen oder beabstandet hiervon enden.

Die distalen Endabschnitte der benachbarten Messhindernisse können miteinander verbunden sein. Hierdurch kann ein geschlossener Verlauf der Hindernisse gebildet sein, sei es in Stern- oder Mehreckform.

Die Druckmessstellen können jeweils in einem mittleren Abschnitt des zugeordneten Hindernisses angeordnet sein. Eine dem jeweiligen Hindernis zugeordnete Druckmessstelle kann in der Mitte des langgestreckten Hindernisverlaufs angeordnet sein.

Die Hindernisse können jeweils mit wenigstens einer Hindernisform aus der folgenden Gruppe gebildet sein: auf der Messfläche überstehender Steg oder Zaun und auf der Messfläche angeordnete Vertiefung, zum Beispiel in Form eines Grabens. Die Hindernisformen können für die Hindernisse jeweils durchgehend oder unterbrochen ausgebildet sein.

Die Anordnung von Messhindernissen kann wenigstens drei Hindernisse aufweisen. Die Anzahl der Druckmessöffnungen kann gleich der Anzahl der Hindernisse sein. Die wenigstens drei Hindernisse können getrennt voneinander oder miteinander verbunden ausgeführt sein. Wahlweise kann mit den wenigstens drei Hindernissen ein geschlossener Hindernisverlauf ausgebildet sein, in welchem den Hindernissen jeweils wenigstens eine Druckmessstelle zugeordnet ist.

Die Druckmessstellen können mit einer jeweiligen Druckmessöffnung ausgeführt sein, die rückseitig in einen zugeordneten Kanalabschnitt münden können, welcher einen Anschluss für die Druckmesseinrichtung aufweist. Der Kanalabschnitt kann sich auf der Rückseite der Messfläche quer hierzu erstrecken. Ein Kanalquerschnitt kann sich verändern. Beispielsweise kann ein sich unmittelbar an die Druckmessöffnung anschließender Kanalabschnitt mit einem ersten Kanalquerschnitt ausgebildet sein, wohingegen ein sich hieran rückseitig anschließender Kanalabschnitt einen zweiten Kanalquerschnitt aufweist, welcher größer als der erste Kanalquerschnitt ist. In Bezug auf die Messfläche der Grenzschichtsonde kann an einem distalen Ende des Kanalabschnitts ein Anschluss für die Druckmesseinrichtung angeordnet sein.

Alternativ können eine oder mehrere der Druckmessstellen mit einer auf der Messfläche angeordneten Druckmesseinrichtung gebildet sein, zum Beispiel einer druckempfindlichen Messfolie, die wahlweise in eine zugeordnet Öffnung wenigstens teilweise eingelassen sein kann oder auf der Messebene angeordnet ist.

Jedem der Messhindernisse kann jeweils genau eine Druckmessstelle zugeordnet sein. Alternativ können einem oder mehreren der Messhindernisse mehr als eine Druckmessstelle zugeordnet sein.

In Verbindung mit der Messanordnung sowie dem Verfahren zum Bestimmen des Fluidstroms können die vorangehend für die Grenzschichtsonde erläuterten Ausgestaltungen entsprechend vorgesehen sein.

Bei dem Verfahren können die Druckmesswerte zeitaufgelöst erfasst werden, woraus physikalische Messgröße zeitabhängig in Betrag und / oder Richtung bestimmt werden können, zum Beispiel die Wandschubspannung und / oder eine Fließgeschwindigkeit im Grenzschichtbereich des Fluidstroms auf der Messfläche.

Die Richtung der physikalischen Messgröße, insbesondere die Richtung der Wandschubspannung, des Fluidstroms kann frei von einer Drehung der Messfläche mit den Messhindernissen bestimmt werden. Bei dieser Ausführungsform ist es nicht notwendig und nicht vorgesehen, die Sondenwand mit der Messfläche zu drehen, um Druckmesswerte zu erfassen, aus denen die Richtung der Wandschubspannung bestimmt werden kann. Vielmehr steht die Messfläche still, während der zu bestimmende Fluidstrom hierauf strömt.

Beschreibung von Ausführungsbeispielen

Im Folgenden werden weitere Ausführungsbeispiele unter Bezugnahme auf Figuren einer Zeichnung näher erläutert. Hierbei zeigen:

Fig. 1 eine schematische Darstellung von Messflächen einer Grenzschichtsonde mit unterschiedlichen Anordnungen von Messhindernissen;

Fig. 2 eine schematische Darstellung einer der Messflächen aus Fig. 1 sowie eine Schnittdarstellung hierzu;

Fig. 3 eine schematische Darstellung von weiteren Messflächen einer Grenzschichtsonde mit unterschiedlichen Anordnungen von Messhindernissen und Druckmessstellen;

Fig. 4 eine schematische Darstellung für Differenzdruckverläufe in Abhängigkeit vom Drehwinkel und

Fig. 5 eine schematische Darstellung für eine 4D-Kalibrationskurve.

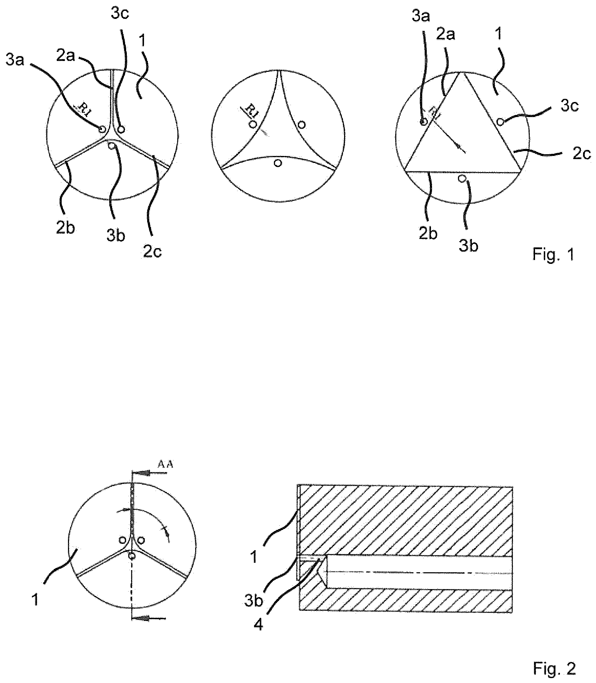

Fig. 1 zeigt eine schematische Darstellung einer Messfläche 1 einer Grenzschichtsonde zum Bestimmen eines Fluidstroms, insbesondere der Richtung des Fluidstroms, mit verschiedenen Anordnungen a), b) und c) von Messhindernissen 2a, 2b, 2c, die als nach vorn überstehende mikroskopische Stege oder in die Messfläche 1 eingelassene Vertiefungen ausgebildet sind, derart, dass ein zu bestimmender Fluidstrom, der an der Messfläche 1 vorbeiströmt lokal durch die Messhindernisse 2a, 2b, 2c gestört wird, sodass sich lokale Druckverhältnisse einstellen, die dann in Druckmessstellen 3a, 3b, 3c, welche jeweils einem der Messhindernisse 2a, 2b, 2c zugeordnet sind, abgegriffen werden können.

In Verbindung mit den Druckmessstellen 3a, 3b, 3c kann vorgesehen sein, diese jeweils mit einer Druckmessöffnung im Bereich der Messfläche 1 auszubilden, über die der lokale Druck gemessen werden kann. Alternativ kann auf der Messfläche 1 eine jeweilige Druckmesseinrichtung nageordnet werden, zum Beispiel in Form einer druckempfindlichen Folie, um den lokalen Druck zu messen.

Bei der Anordnung a) von Messhindernissen 2a, 2b, 2c sind diese mittig durch einen definierten Radius R1 verrundet. Eine Anhebung von R1 (in Fig. 1 von links nach rechts) resultiert in unterschiedlichen Sensorgeometrien. Das Extrem, R1 = ∞, welches nicht Bestandteil der Erfindung ist, erzeugt ein dreieckiges Hindernis (vgl. Anordnung c)). Weiterhin kann die Variation der Anzahl $n_s$ der Messhindernisse 2a, 2b, 2c vorgesehen sein. Unendliche Radien würden dann zu n-Eckigen Hindernissen führen. Unendlich viele Stege mit unendlich großen Radien in der Mitte resultieren schlussendlich in einer Kreisform, welche nicht Bestandteil der Erfindung ist, wobei die Anzahl der Druckmessstellen um den Kreis herum endlich gehalten werden muss.

Fig. 2 zeigt in diesem Zusammenhang eine schematische Darstellung der Anordnung a) von Messhindernissen 2a, 2b, 2c, wobei auf der rechten Seite eine Schnittdarstellung gezeigt ist, bei der hinter der Druckmessöffnung ein Kanal 4 mit einem ersten und einem zweiten Kanalabschnitt 4a, 4b gezeigt ist, welcher sich quer zur Messfläche 1 rückseitig von der Druckmessöffnung erstreckt. Am Ende 5 des Kanals 4 kann eine Druckmesseinrichtung (nicht dargestellt) angeschlossen werden, um den Druck zu messen.

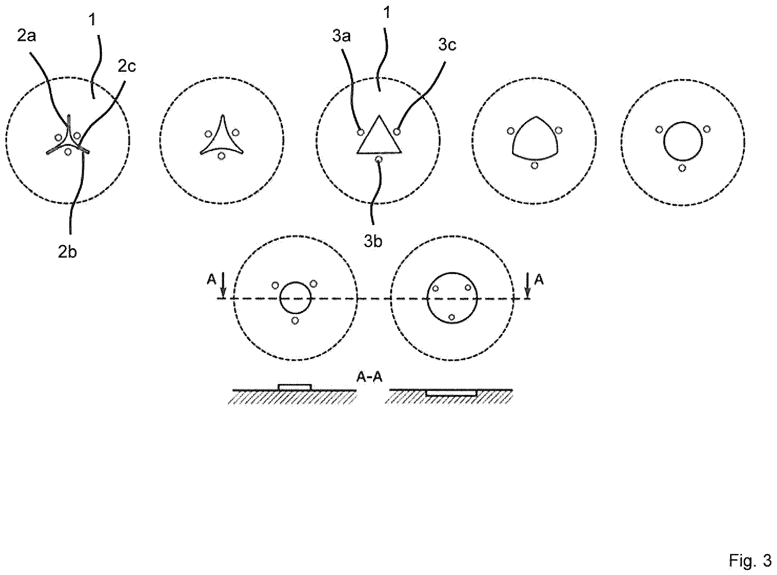

Fig. 3 zeigt weitere Ausgestaltungen für eine Grenzschichtsonde, bei der auf der Messfläche 1 eine Anordnung von Messhindernissen 2a, 2b, 2c angeordnet ist, wobei die dreieckigen und kreisförmigen Messhindernisse nicht Bestandteil der Erfindung sind. Hierbei sind distale Endabschnitte 6a, 6b benachbarter Messhindernisse miteinander verbunden, so dass ein durchgehender Verlauf hergestellt ist.

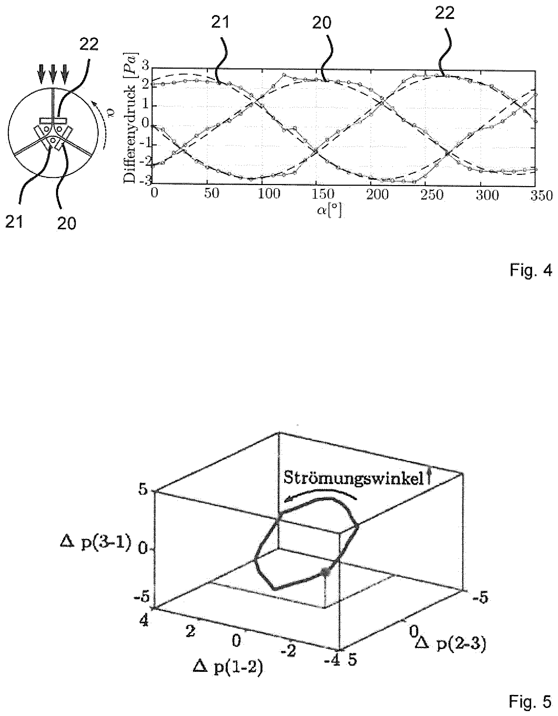

Die Fig. 4 und 5 zeigen Differenzdruckverläufe sowie eine 4D-Kalibrationskurve.

Fig. 4 zeigt Ergebnisse von Messungen. Analog zur bekannten Grenzschichtsonde mit Grenzschichtzaun werden die Differenzdruckverläufe als Bewertungsgrundlage herangezogen. Jeweils zwei Drücke werden hierbei in Form eines Differenzdrucks zu einem Messwert zusammengefasst.

Es lassen sich sehr gut drei phasenversetzte, harmonische Differenzdruckverläufe 20, 21, 22 erkennen, die der Winkelcharakteristik des klassischen Grenzschichtzaunes sehr ähnlich sind. Die Bezugszeichen 20, 21, 22 sind auf der linken Seite in Fig. 4 schematisch noch den zwei Druckmessstelen zugeordnet, für die jeweils der Verlauf der Druckdifferenz im Diagramm in Fig. 4 gezeigt ist. Für den Fall einer konstanten Einbauposition α ergibt sich eine Kombination aus drei Differenzdruckwerten, welche auf eine eindeutige Strömungsrichtung schließen lassen. Eine Möglichkeit ist die direkte Kalibrierung der Grenzschichtsonde, bei der die drei Differenzdrücke in Abhängigkeit des Strömungswinkels aufgetragen werden (vgl. Fig. 5).

Es können auch weitere Ansätze zur Winkelkalibrierung der Sonde verwendet werden. Eine Methode besteht darin, den Strömungswinkel analytisch anhand der drei Differenzdrücke zu berechnen:

$$\beta_{\text{Strömung}} = f(\Delta p(1\text{-}2),\ \Delta p(2\text{-}3),\ p\Delta(3\text{-}1))$$

Sowohl der Strömungswinkel als auch der maximal auftretende Differenzdruck (ideal bei 30° $\pm\ n \cdot 120°$ $n \in$ N) können mit nur einer einzigen Einbauposition bestimmt werden. Daher entfällt die aufwendige Drehung der Sonde.

Ein alternativer Auswertealgorithmus basiert auf einer Linearisierung der oben genannten Winkelcharakteristik. Für die lineare Interpolation sind mindestens zwei Differenzdrücke notwendig. Im vorliegenden Fall sind es drei. Eine Grenzschichtsonde mit n Stegen würde im einfachsten Fall n Differenzdruckwerte liefern und die Winkelbestimmung weiter verbessern.

Potentielle Anwendungsfälle sind vielzahlig. Es bedarf nach einer robusten kostengünstigen und zuverlässigen Messeinheit, um Strömungen an Objekten aller Art zu vermessen. Hierfür kann die hier offenbarte Technologie genutzt werden. Zu nennen hierbei beispielhaft - in beliebiger Reihenfolge - die Turbomaschinen- und Autoindustrie, Hersteller von Windkraftanlagen und Flugzeugbauern. Weil der vorgestellte Ansatz verspricht, auch den anliegenden statischen Druck bestimmen zu können, würde eine Einheit des beschriebenen Sensortyps ausreichen, um eine umfangreiche Palette an relevanten Messdaten abbilden zu können. Vorher waren hierfür mutiple und unerschwingliche Systeme notwendig, welche nur in bestimmten Anwendungsfällen überhaupt eingesetzt werden konnten.

Mit der hier vorgestellten Sondentechnologie stehen erstmalig Strömungsinformationen zur Verfügung, die bis dato nur durch aufwendige Computermodelle mehr oder weniger zuverlässig abgebildet werden konnten. Denkbar ist auch die Validierung und Weiterentwicklung bestehender Simulationstechnik auf Basis der nun zur Verfügung stehenden Information.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein, wobei die Erfindung durch die Merkmale der unabhängigen Ansprüche definiert ist.

**Patentansprüche**

1. Grenzschichtsonde zum Bestimmen eines Fluidstroms, mit:

- einer Messfläche (1), die an einer Sondenwand gebildet ist und entlang welcher im Messbetrieb ein zu bestimmender Fluidstrom anliegt;
- einer Anordnung von Messhindernissen (2a, 2b, 2c), die

- im Bereich der Messfläche (1) als Hindernisse gebildet sind, die den Fluidstrom in einem Strömungsbereich benachbart zur Messfläche (1) stören und im Bereich der Messfläche bezogen auf ein Zentrum der Anordnung von Messhindernissen (2a,2b, 2c) drehsymmetrisch angeordnet sind
- jeweils einen langgestreckten Hindernisverlauf aufweisen, welcher

- sich über eine jeweilige Hindernislänge zumindest abschnittweise entlang einer gekrümmten Linie erstreckt und
- in Bezug zum Zentrum der Anordnung von Messhindernissen (2a, 2b, 2c) konkav oder konvex gekrümmt ist, und

- in Umfangsrichtung bezogen auf das Zentrum der Anordnung in im Wesentlichen äquidistanten Winkelabständen angeordnet sind; und

- Druckmessstellen (3a, 3b, 3c), die zum Erfassen eines jeweiligen lokalen Drucks im Bereich der Messfläche (1) jeweils in radialer Richtung bezogen auf das Zentrum der Anordnung benachbart zu einem zugeordneten der Hindernisse angeordnet sind.

2. Grenzschichtsonde nach Anspruch 1, **dadurch gekennzeichnet, dass** distale Endabschnitte benachbarter Messhindernisse (2a, 2b, 2c) benachbart zueinander angeordnet sind, wobei die distalen Endabschnitte radial außen liegend angeordnete Abschnitte der langgestreckten Hindernisverläufe sind.

3. Grenzschichtsonde nach Anspruch 2, **dadurch gekennzeichnet, dass** die distalen Endabschnitte der benachbarten Messhindernisse (2a, 2b, 2c) miteinander verbunden sind.

4. Grenzschichtsonde nach mindestens einem der vorangehenden Ansprüche, dadurch **ge kennzeichnet**, dass die Druckmessstellen (3a, 3b, 3c) jeweils in einem mittleren Abschnitt des zugeordneten Hindernisses angeordnet sind.

5. Grenzschichtsonde nach mindestens einem der vorangehenden Ansprüche, dadurch **ge kennzeichnet**, dass die Hindernisse jeweils mit wenigstens einer Hindernisform aus der folgenden Gruppe gebildet sind:

- auf der Messfläche (1) überstehender Steg und
- auf der Messfläche (1) angeordnete Vertiefung.

6. Grenzschichtsonde nach mindestens einem der vorangehenden Ansprüche, dadurch **ge kennzeichnet**, dass die Anordnung von Messhindernissen (2a, 2b, 2c) wenigstens drei Hindernisse aufweist.

7. Grenzschichtsonde nach mindestens einem der vorangehenden Ansprüche, dadurch **ge-kennzeichnet**, dass eine oder alle Druckmessstellen (3a, 3b, 3c) jeweils mit einer Druckmessöffnung gebildet sind, an die eine Druckmesseinrichtung koppelbar ist.

8. Grenzschichtsonde nach mindestens einem der vorangehenden Ansprüche, **dadurch gekennzeichnet, dass** jedem der Messhindernisse (2a, 2b, 2c) jeweils genau eine Druckmessstelle (3a, 3b, 3c) zugeordnet ist.

9. Messanordnung zum Bestimmen eines Fluidstroms, mit

- einer Grenzschichtsonde nach mindestens einem der vorangehenden Ansprüche;
- einem Messraum, der eingerichtet ist, eine Strömung eines zu bestimmenden Fluidstroms aufzunehmen, wobei die Strömung entlang einer Sondenwand der Grenzschichtsonde mit einer hierauf gebildeten Messfläche (1) strömen kann; und
- einer Druckmesseinrichtung, die eingerichtet ist, an Druckmessstellen (3a, 3b, 3c) im Bereich der Messfläche (1) der Grenzschichtsonde jeweils einen lokalen Druck zu erfassen.

10. Verfahren zum Bestimmen eines Fluidstroms, mit

- Bereitstellen einer Grenzschichtsonde nach mindestens einem der Ansprüche 1 bis 8;
- Ausbilden einer Strömung eines zu bestimmenden Fluidstroms in einem Messraum, wobei die Strömung hierbei entlang einer Sondenwand der Grenzschichtsonde mit einer hierauf gebildeten Messfläche (1) strömt;
- Erfassen von Druckmesswerten für einen lokalen Druck an Druckmessstellen (3a, 3b, 3c) im Bereich der Messfläche (1) der Grenzschichtsonde, wobei hierbei für benachbarte Druckmessstellen (3a, 3b, 3c) Differenzdrücke erfasst werden; und
- Bestimmen wenigstens einer physikalischen Messgröße für eine Grenzschicht des Fluidstroms auf der Messfläche (1) der Grenzschichtsonde mittels Auswerten der Druckmesswerte, wobei die wenigstens eine physikalische Messgröße aus der folgenden Gruppe ausgewählt wird: Fließgeschwindigkeit und Wandschubspannung.

11. Verfahren nach Anspruch 10, **dadurch gekennzeichnet, dass** die Druckmesswerte zeitaufgelöst erfasst werden.

12. Verfahren nach Anspruch 10 oder 11, **dadurch gekennzeichnet, dass** für die wenigstens eine physikalische Messgröße frei von einer Drehung der Messfläche (1) mit der Anordnung von Messhindernissen (2a, 2b, 2c) bestimmt wird.

**Claims**

1. A boundary layer probe for determining a fluid stream, with:

    - a measuring surface (1), which is formed on a probe wall and lies along a fluid stream to be determined in the measuring mode;
    - an arrangement of measuring obstacles (2a, 2b, 2c), which

        - are formed in the area of the measuring surface (1) as obstacles, which disrupt the fluid stream in a flow area adjacent to the measuring surface (1), and in the area of the measuring surface are rotationally symmetrically arranged relative to a center of arrangement of the measuring obstacles (2a, 2b, 2c),
        - each have an elongated progression of obstacles, which

            - extends over a respective obstacle length at least sectionally along a curved line, and
            - is concavely or convexly curved in relation to the center of arrangement of the measuring obstacles (2a, 2b, 2c), and

            - are arranged in a circumferential direction in relation to the center of arrangement at essentially equidistance angular distances; and

        - pressure measuring points (3a, 3b, 3c), which are arranged for detecting a respective local pressure in the area of the measuring surface (1) in each case adjacent to an associated one of the obstacles in a radial direction relative to the center of arrangement.

2. The boundary layer probe according to claim 1, **characterized in that** distal end sections of adjacent measuring obstacles (2a, 2b, 2c) are arranged adjacent to each other, wherein the end sections are radially outwardly lying sections of the elongated obstacle progressions.

3. The boundary layer probe according to claim 2, **characterized in that** the distal end sections of the adjacent measuring obstacles (2a, 2b, 2c) are connected with each other.

4. The boundary layer probe according to at least one of the preceding claims, **characterized in that** the pressure measuring points (3a, 3b, 3c) are each arranged in a middle section of the associated obstacle.

5. The boundary layer probe according to at least one of the preceding claims, **characterized in that** the obstacles are each formed with at least one form of obstacle from the following group:

    - a web protruding on the measuring surface (1) and
    - a depression arranged on the measuring surface (1).

6. The boundary layer probe according to at least one of the preceding claims, **characterized in that** the arrangement of measuring obstacles (2a, 2b, 2c) has at least three obstacles.

7. The boundary layer probe according to at least one of the preceding claims, **characterized in that** one or all pressure measuring points (3a, 3b, 3c) are each formed with a pressure measuring opening to which a pressure measuring device can be coupled.

8. The boundary layer probe according to at least one of the preceding claims, **characterized in that** exactly one respective pressure measuring point (3a, 3b, 3c) is associated to each of the measuring obstacles (2a, 2b, 2c).

9. A measuring arrangement for determining a fluid stream, with

    - a boundary layer probe according to at least one of the preceding claims;
    - a measuring space configured to receive a flow of a fluid stream to be determined, wherein the flow can stream along a probe wall of the boundary layer probe with a measuring surface (1) formed thereupon; and
    - a pressure measuring device configured to detect a respective local pressure at pressure measuring points (3a, 3b, 3c) in the area of the measuring surface (1) of the boundary layer probe.

**10.** A method for determining a fluid stream, with:

- Providing a boundary layer probe according to at least one of claims 1 to 8;
- Forming a flow of a fluid stream to be determined in a measuring space, wherein the flow here streams along a probe wall of the boundary layer probe with a measuring surface (1) formed thereupon;
- Detecting measured pressure values for a local pressure at pressure measuring points (3a, 3b, 3c) in the area of the measuring surface (1) of the boundary layer probe, wherein differential pressures are detected for adjacent pressure measuring points (3a, 3b, 3c); and
- Determining at least one physical measured variable for a boundary layer of the fluid stream on the measuring surface (1) of the boundary layer probe by evaluating the measured pressure values, wherein the at least one physical measured variable is selected from the following group: flow rate and wall shear stress.

**11.** The method according to claim 10, **characterized in that** the measured pressure values are detected in a time-resolved manner.

**12.** The method according to claim 10 or 11, **characterized in that** the at least one physical measured variable is determined with the arrangement of measuring obstacles (2a, 2b, 2c) free of any rotation of the measuring surface (1).


## Revendications

**1.** Sonde de couche limite, destinée à déterminer un courant fluidique, comprenant :

- une surface de mesure (1), qui est formée sur une paroi de sonde et le long de laquelle, en mode de mesurage est adjacent un courant fluidique que l'on doit déterminer ;
- un ensemble d'obstacles de mesure (2a, 2b, 2c), lesquels

- dans la zone de la surface de mesure (1) sont formés en tant qu'obstacles perturbant le courant fluidique dans une zone d'écoulement au voisinage de la surface de mesure (1) et dans la zone de la surface de mesure, sont placés de manière symétrique en rotation, en rapport à un centre de l'ensemble d'obstacles de mesure (2a, 2b, 2c),
- présentent chacun un trajet allongé d'obstacle, qui

- sur une longueur respective d'obstacle s'étend au moins par tronçons le long d'une ligne incurvée, et
- en rapport au centre de l'ensemble d'obstacles de mesure (2a, 2b, 2c) sont incurvés de manière concave ou convexe, et

- dans la direction périphérique, sont placés à des écarts angulaires sensiblement équidistants en rapport au centre de l'ensemble ; et

- des points de mesure de la pression (3a, 3b, 3c), qui pour détecter une pression locale respective sont placés dans la zone de la surface de mesure (1) respectivement en direction radiale, en rapport au centre de l'ensemble au voisinage de l'un parmi les obstacles qui leur est associé.

**2.** Sonde de couche limite selon la revendication 1, **caractérisée en ce que** des tronçons d'extrémité distaux d'obstacles de mesure (2a, 2b, 2c) voisins sont placés au voisinage les uns des autres, les tronçons d'extrémité distaux étant des tronçons placés en situation radiale extérieure des trajets allongés d'obstacles.

**3.** Sonde de couche limite selon la revendication 2, **caractérisée en ce que** les tronçons d'extrémité distaux des obstacles de mesure (2a, 2b, 2c) voisins sont assemblés les uns aux autres.

**4.** Sonde de couche limite selon au moins l'une quelconque des revendications précédentes, **caractérisée en ce que** les points de mesure de la pression (3a, 3b, 3c) sont placés chacun dans un tronçon médian de l'obstacle associé.

**5.** Sonde de couche limite selon au moins l'une quelconque des revendications précédentes, **caractérisée en ce que** les obstacles sont formés chacun avec au moins une forme d'obstacle du groupe suivant :

- un listel s'élevant sur l'surface de mesure (1) et
- un creux placé sur l'surface de mesure (1).

**6.** Sonde de couche limite selon au moins l'une quelconque des revendications précédentes, **caractérisée en ce que** l'ensemble d'obstacles de mesure (2a, 2b, 2c) comporte au moins trois obstacles.

**7.** Sonde de couche limite selon au moins l'une quelconque des revendications précédentes, **caractérisée en ce qu'**un ou tous les points de mesure de la pression (3a, 3b, 3c) sont formés chacun avec un orifice de mesure de la pression, sur laquelle peut s'accoupler un système de mesure de la pression.

8. Sonde de couche limite selon au moins l'une quelconque des revendications précédentes, **caractérisée en ce qu'**à chacun des obstacles de mesure (2a, 2b, 2c) est associé précisément un point de mesure de la pression (3a, 3b, 3c).

9. Ensemble de mesure, destiné à déterminer un courant fluidique, comprenant

    - une sonde de couche limite selon au moins l'une quelconque des revendications précédentes ;
    - un espace de mesure, qui est aménagé pour recevoir un écoulement d'un courant fluidique que l'on doit déterminer, l'écoulement pouvant circuler le long d'une paroi de sonde de la sonde de couche limite avec une surface de mesure (1) formée sur celle-ci ; et
    - un système de mesure de la pression, qui est aménagé pour détecter respectivement une pression locale sur des points de mesure de la pression (3a, 3b, 3c) dans la zone de la surface de mesure (1) de la sonde de couche limite.

10. Procédé, destiné à déterminer un courant fluidique, comprenant les étapes consistant à :

    - mettre à disposition une sonde de couche limite selon au moins l'une quelconque des revendications 1 à 8 ;
    - créer un écoulement d'un courant fluidique que l'on doit déterminer dans un espace de mesure, à cet effet, l'écoulement circulant le long d'une paroi de sonde de la sonde de couche limite avec une surface de mesure (1) formée sur celle-ci ;
    - détecter des valeurs de mesure de la pression pour une pression locale sur des points de mesure de la pression (3a, 3b, 3c) dans la zone de la surface de mesure (1) de la sonde de couche limite, à cet effet, pour des points de mesure de la pression (3a, 3b, 3c) voisins étant détectées des pressions différentielles ; et
    - déterminer au moins une grandeur de mesure physique pour une couche limité du courant fluidique sur l'surface de mesure (1) de la sonde de couche limite par évaluation des valeurs de mesure de la pression, l'au moins une grandeur de mesure physique étant sélectionnée dans le groupe suivant : vitesse d'écoulement et frottement de la paroi.

11. Procédé selon la revendication 10, **caractérisé en ce que** les valeurs de mesure de la pression sont détectées en résolution temporelle.

12. Procédé selon la revendication 10 ou 11, **caractérisé en ce que** pour l'au moins une grandeur de mesure physique, la détermination s'effectue sans une rotation de la surface de mesure (1) avec l'ensemble d'obstacles de mesure (2a, 2b, 2c).

Fig. 1

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9315388 A1
- DE 19724116 A1
- EP 1314985 A1

**In der Beschreibung aufgeführte Nicht-Patentliteratur**

- **MA et al.** A Study of Directional MEMS Dual-fences Gauge. *Proceedings of the 10th IEEE International Conference on Nano/Micro Engineered and Molecular Systems,* 2015